# EUROPEAN PATENT SPECIFICATION

(11) **EP 3 950 459 B1**
(45) Date of publication and mention of the grant of the patent: **18.12.2024**
(21) Application number: 19861284.8
(22) Date of filing: 27.03.2019
(51) Int. Cl.: B61D 27/00, B60H 1/24, B60H 1/00

(54) **VENTILATION DEVICE FOR RAILWAY VEHICLES**
LÜFTUNGSVORRICHTUNG FÜR SCHIENENFAHRZEUGE
DISPOSITIF DE VENTILATION POUR VÉHICULES FERROVIAIRES

(43) Date of publication of application: 09.02.2022
(73) Proprietor: Hitachi, Ltd., Tokyo 100-8280 (JP)
(72) Inventor: KON, Misaki, Tokyo 100-8280 (JP); MORITA, Kiyoshi, Tokyo 100-8280 (JP); HAYASHI, Tomoo, Tokyo 100-8280 (JP); KOREISHI, Kazuto, Tokyo 100-8280 (JP); AKIMARU, Daisuke, Tokyo 100-8280 (JP)
(74) Representative: Mewburn Ellis LLP
(86) International application number: PCT/JP2019/013117
(87) International publication number: WO 2020/194566

(56) References cited:
- DE-A1- 102015 122 748
- JP-A- 2000 185 546
- JP-A- 2002 087 253
- JP-A- 2010 064 570
- JP-A- H05 178 207
- JP-A- H08 253 140
- JP-A- H10 152 051
- US-A1- 2010 101 656
- No further relevant documents disclosed

## Description

### Technical Field

The present invention relates to a rail-vehicle ventilation system.

### Background Art

When a railway vehicle or the like travelling at a high speed passes through a tunnel, a sudden pressure change occurs outside the vehicle. Due to such a sudden change of the vehicle-external pressure, the balance between an air-supply amount and a discharge amount for ventilating air inside and outside the vehicle is lost. Accordingly, the vehicle-internal pressure changes, and passengers feel auditory discomfort in some cases.

In view of this, in order to prevent changes of the vehicle-internal pressure, in conventional known ventilation control, a gate valve is provided on an air-supply path and an exhaust path, and when a vehicle passes through a tunnel, the gate valve is closed to stop ventilation temporarily. However, according to the ventilation control, as the length of a tunnel through which a vehicle passes increases, the length of time over which ventilation is stopped also increases. Accordingly, a problem arises that the carbon dioxide concentration inside the vehicle rises, and a clean environment is lost.

To cope with this, Patent Document 1 describes a vehicle ventilation system that can reduce discomfort caused by sudden pressure changes inside the vehicle, without stopping ventilation for a long time. According to the vehicle ventilation system disclosed in Patent Document 1, it is possible to obtain the gradient of variations in pressure of air flowing through an air duct that connects the inside of the vehicle and the outside of the vehicle, and to shut off the duct connecting the inside of the vehicle and the outside of the vehicle by a damper in a case where the gradient is equal to or greater than a set value. Thereby, it is possible to prevent increase in the gradient of pressure variations inside the vehicle, and to prevent discomfort that may otherwise be felt by passengers inside the vehicle.

Patent Document 2 proposes a ventilation path device for preventing propagation of the differential pressure in a ventilation path. Patent Document 3 proposes devices for the prevention of a large amount of air from flowing through a cabin. Patent Document 4 proposes a pressure protection device for a rail vehicle. Patent Document 5 proposes a method of re-controlling the air volume in a car. Patent Document 6 proposes pressure relieving mechanisms for a ventilation system. Patent Document 7 proposes a ventilation control method and a ventilation system. Patent Document 8 proposes a train ventilator. Patent Document 9 proposes a method and a device for preventing fast changes of the atmospheric pressure in an enclosed room induced by an external environment.

### Prior Art Document

### Patent Document

Patent Document 1: JP-2003-72358-A
Patent Document 2: JP-2010-064570-A
Patent Document 3: JP-H10-152051-A
Patent Document 4: DE-10-2015-122748-A1
Patent Document 5: JP-2002-087253-A
Patent Document 6: JP-H08-253140-A
Patent Document 7: JP-2000-185546-A
Patent Document 8: JP-H05-178207-A
Patent Document 9: US-2010-101656-A1

### Summary of the Invention

### Problem to be Solved by the Invention

Here, in the control performed in the vehicle ventilation system described in Patent Document 1, pressure variations are obtained from sensing values of the pressure provided outside the vehicle, and an air-supply valve and an exhaust valve are shut off in a case where the gradient of variations is equal to or greater than the set value. At this time, if a highly functional blower that does not generate changes in the air volume almost at all in response to pressure variations outside the vehicle is used for the purpose of air supply and air discharge, the pressure inside the vehicle never changes suddenly even if a pressure difference occurs between the pressures inside and outside the vehicle when the valves are opened. However, in a case where such a blower is not used, it is anticipated that a sudden pressure change occurs inside the vehicle in response to a pressure variation outside the vehicle.

An object of the present invention is to provide a rail-vehicle ventilation system that can maintain comfortableness by suppressing sudden pressure variations inside the vehicle, and surely attaining a clean vehicle-internal environment by control of an air-supply valve and an exhaust valve.

### Means for Solving the Problem

In order to solve the problem described above, a rail-vehicle ventilation system is provided according to claim 1.

### Advantages of the Invention

According to the present invention, it is possible to provide a railway-vehicle ventilation system that can maintain comfortableness by suppressing sudden pressure variations inside the vehicle, and surely attaining a clean vehicle-internal environment by control of an air-supply valve and an exhaust valve.

Problems, configurations and effects other than those described above become apparent from the following explanations of embodiments.

### Brief Description of the Drawings

FIG. 1 is a cross-sectional view of a railway vehicle according to a first embodiment.
FIG. 2 is a cross-sectional view of an air-supply valve and an exhaust valve common to each embodiment.
FIG. 3 is a control flow diagram of a ventilation method intended for railway vehicles according to the first embodiment.
FIG. 4 is a timing chart and a graph illustrating timings to open and close the air-supply/exhaust valves, and the transition of vehicle-internal/external pressures and vehicle-internal carbon dioxide concentration at the time when a railway vehicle to which the first embodiment is applied passes through a tunnel.
FIG. 5 is a control flow diagram of a ventilation method intended for railway vehicles according to a second embodiment.
FIG. 6 is a cross-sectional view of a railway vehicle according to a third embodiment.
FIG. 7 is a control flow diagram of a ventilation method intended for railway vehicles according to a third embodiment.
FIG. 8 is a cross-sectional view of a railway vehicle according to a fourth embodiment.
FIG. 9 is a control flow diagram of a railway-vehicle ventilation method according to the fourth embodiment.
FIG. 10 is a control flow diagram of a railway-vehicle ventilation method according to a fifth embodiment.
FIG. 11 is a control flow diagram of a railway-vehicle ventilation method according to a sixth embodiment.

### Modes for Carrying Out the Invention

Rail vehicles are vehicles that are operated along constructed tracks, and include railway vehicles, monorail vehicles, streetcars, automated transportation vehicles and the like. Embodiments of the present invention are explained by taking railway vehicles as a representative example of rail vehicles.

In addition, in the present specification, "vehicle-external-pressure information" includes not only sensing values of a vehicle-external-pressure sensor, but also estimates and computed values of the vehicle-external pressure. Accordingly, a "vehicle-external-pressure information acquiring section" includes not only the vehicle-external-pressure sensor, but also all devices that can acquire information for estimating or computing the vehicle-external pressure.

Furthermore, "vehicle-internal-pressure information" includes not only sensing values of a vehicle-internal-pressure sensor, but also estimates and computed values of the vehicle-internal pressure. Accordingly, a "vehicle-internal-pressure information acquiring section" includes not only the vehicle-internal-pressure sensor, but also all devices that can acquire information for estimating or computing the vehicle-internal pressure.

Hereinafter, embodiments of the present invention are explained by using the drawings.

### [First Embodiment]

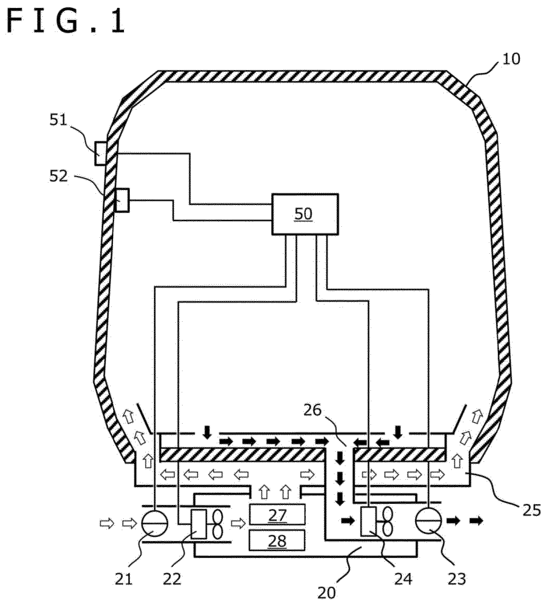

FIG. 1 is a schematic cross-sectional view of a railway vehicle provided with a ventilation system according to a first embodiment. A railway vehicle 10 has an air-supply fan 22 that supplies air outside the vehicle to the inside of the vehicle, an air-supply valve 21 that can adjust the air-supply flow rate, an exhaust fan 24 that discharges air inside the vehicle to the outside of the vehicle, and an exhaust valve 23 that can adjust the air-discharge flow rate. The air-supply fan 22 and the exhaust fan 24 constitute a ventilating section, and the air-supply valve 21 and the exhaust valve 23 constitute a flow-rate adjusting section.

Note that although a configuration provided with both the air-supply fan 22 and the exhaust fan 24 is illustrated in FIG. 1, another possible configuration is provided only with the air-supply fan 22 or only with the exhaust fan 24. In addition, in the configuration illustrated in FIG. 1, the air-supply fan 22 and the air-supply valve 21 are integrated with an air-conditioning device 20, and an exhaust device having the exhaust fan 24 and the exhaust valve 23 is arranged separately from the air-conditioning device 20.

However, the configuration to be adopted may be any of: a configuration in which the air-supply fan 22, the air-supply valve 21, the exhaust fan 24 and the exhaust valve 23 are integrated with the air-conditioning device 20; a configuration in which an air-supply device having the air-supply fan 22 and the air-supply valve 21, and the exhaust device are both arranged separately from the air-conditioning device 20; a configuration in which a ventilation system having the air-supply device and the exhaust device is arranged separately from the air-conditioning device 20; and a configuration in which the exhaust fan 24 and the exhaust valve 23 are integrated with the air-conditioning device 20, and the air-supply fan 22 and the air-supply valve 21 are arranged separately from the air-conditioning device 20. It should be noted, however, that in a case where the air-supply device is arranged separately from the air-conditioning device 20, a configuration may be adopted in which the air-supply device and the air-conditioning device 20 communicate with each other via a duct (not illustrated).

Air taken in from the outside of the vehicle by the air-supply fan 22 is taken into the air-conditioning device 20. Then, the air is cooled by a heat exchanger 27 in the air-conditioning device 20 at the time of cooling operation, or is heated by a heater 28 in the air-conditioning device 20 at the time of heating operation, and then blown out to the inside of the vehicle via a conditioned-air duct 25. The air that has been blown out to the inside of the vehicle and gets to have a high carbon dioxide concentration due to the breathing of passengers is delivered to the outside of the vehicle by the exhaust fan 24 via an exhaust duct 26.

The railway vehicle 10 is provided with a vehicle-external-pressure sensor 51 for sensing the pressure of the outside of the vehicle, and a vehicle-internal-pressure sensor 52 for sensing the pressure of the inside of the vehicle. In a suitable configuration, the vehicle-external-pressure sensor 51 constituting the vehicle-external-pressure information acquiring section, and the vehicle-internal-pressure sensor 52 constituting the vehicle-internal-pressure information acquiring section are provided inside and outside both the front car and the last car of a train of railway vehicles 10, but in another possible configuration, they are provided to the inside and the outside of any vehicle of a train.

Sensing values of the vehicle-external-pressure sensor 51 and the vehicle-internal-pressure sensor 52 are input to a control device (control section) 50 provided inside the railway vehicle 10. The control device 50 receives sensing values of the vehicle-external-pressure sensor 51 and the vehicle-internal-pressure sensor 52, and sends signals for operating the air-supply fan 22, the air-supply valve 21, the exhaust fan 24 and the exhaust valve 23. Operation of the control device 50 is mentioned in detail below.

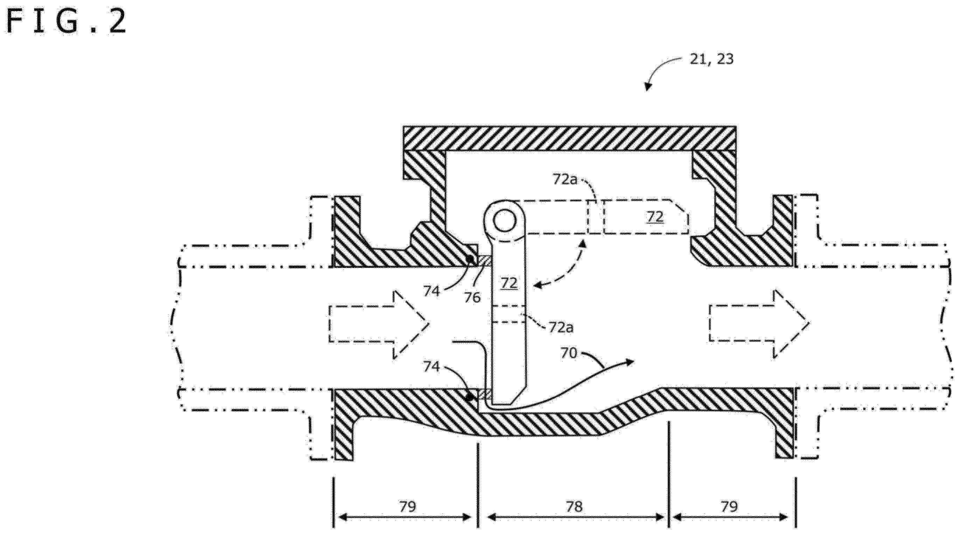

FIG. 2 is a cross-sectional view of the air-supply valve and the exhaust valve used commonly in each embodiment. The air-supply valve 21 (or the exhaust valve 23) having the function of the flow-rate adjusting section that adjusts the ventilation flow rate has connecting sections 79 provided at both end sections along its flow path, and a valve operation section 78 sandwiched by the connecting sections 79. The valve operation section 78 includes a valve 72 having one end that is retained pivotably, and a drive section (not illustrated) that drives the valve 72 on the basis of an instruction from the control device 50. An abutting edge 74 of an end section of the connecting section 79 on a side where the valve 72 is located is provided with a packing 76, and, when the valve 72 is closed, the valve 72 presses the packing 76 to block the flow of air. Note that the valve 72 is not limited to a type of valve that is supported pivotably, but may be a type of valve that moves in the direction along the direction of the flow.

By providing packings 76 discretely (separately at intervals) in the circumferential direction along the abutting edge 74, it is possible to intentionally allow leaking air 70 to flow through gaps between the adjacent packings 76.

Although not illustrated, it is possible to allow the leaking air 70 to flow also by providing protrusions and recesses that are discontinuous in the thickness direction at an edge section of the valve 72 abutting against the abutting edge 74. Alternatively, a packing 76 may be provided continuously in the circumferential direction, and a small opening 72a for the leaking air 70 to flow through the closed valve 72 may be provided through the valve 72. The leaking air 70 is air to be supplied from the outside of the vehicle to the inside of the vehicle, and air to be discharged from the inside of the vehicle to the outside of the vehicle, for ventilation.

Since the flow rate of the leaking air 70 is low, it does not cause a large vehicle-internal-pressure variation accompanying a vehicle-external-pressure variation when a railway vehicle passes through a tunnel at a high speed. Accordingly, passengers and the like never feel auditory discomfort. Since ventilation, although at a small flow rate, continues because of the leaking air 70 even when the valve 72 is closed, the extent of increase in carbon dioxide gas concentration inside the vehicle can be suppressed, and a comfortable vehicle-internal environment can be maintained. Furthermore, by allowing the leaking air 70 to flow, even if the state where the valve 72 is closed due to malfunction of the drive section or the like continues, a certain extent of ventilation can be continued. Accordingly, sudden deterioration of the vehicle-internal environment can be suppressed.

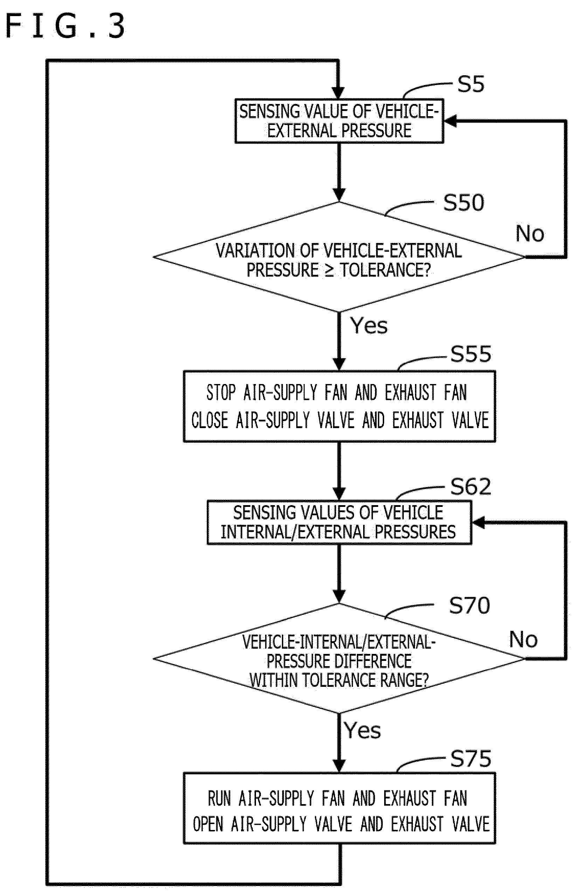

FIG. 3 illustrates a control flow of a ventilation method in the first embodiment. First, the control device 50 activates the air-supply fan 22 and the exhaust fan 24, and opens the air-supply valve 21 and the exhaust valve 23 to perform ventilation at a first ventilation flow rate.

At Step S5, the control device 50 obtains a sensing value of the vehicle-external-pressure sensor 51. At Step S50, the control device 50 determines whether or not a vehicle-external-pressure variation is equal to or larger than a preset tolerance on the basis of the obtained sensing value. In a case where it is determined that the vehicle-external-pressure variation is smaller than the preset tolerance, the flow returns to Step S5, and the control device 50 receives a next sensing value of the vehicle-external-pressure sensor 51.

On the other hand, in a case where it is determined at Step S50 that the vehicle-external-pressure variation is equal to or larger than the preset tolerance, at Step S55, the control device 50 stops the air-supply fan 22 and the exhaust fan 24, closes the air-supply valve 21 and the exhaust valve 23, and shuts off an air path for communication with the outside of the vehicle or reduces the opening area thereof. Thereby, ventilation is performed at a second ventilation flow rate lower than the first ventilation flow rate.

Here, "shutting off the air path" means air-path restriction that does not allow the leaking air 70 to flow, and "reducing the opening area" means air-path restriction that allows the leaking air 70 to flow. The same definitions apply also to the following embodiments.

With the ventilation control described above, it is possible to suppress a vehicle-internal-pressure variation resulting from generation of a large difference between the flow rate of air supply to the inside of the vehicle and the flow rate of air discharge to the outside of the vehicle caused by a sudden pressure change occurred outside the vehicle. Note that although, in the control technique illustrated here, when the air-supply valve 21 and the exhaust valve 23 are operated, the air-supply fan 22 and the exhaust fan 24 are stopped, a technique of operating the air-supply valve 21 and the exhaust valve 23 while keeping the air-supply fan 22 and the exhaust fan 24 running may be used.

Furthermore, at Step S62, the control device 50 receives sensing values of the vehicle-external-pressure sensor 51 and the vehicle-internal-pressure sensor 52. At subsequent Step S70, the control device 50 calculates the difference between the sensing values of the vehicle-external-pressure sensor 51 and the vehicle-internal-pressure sensor 52, and determined whether or not the difference is within a preset tolerance range. In a case where it is determined that the difference is outside the preset tolerance range (the state where the vehicle-internal/external-pressure difference is large is continuing), the flow returns to Step S62, and the control device 50 receives next sensing values of the vehicle-external-pressure sensor 51 and the vehicle-internal-pressure sensor 52.

In contrast to this, in a case where it is determined at Step S70 that the difference is within the preset tolerance range, at Step S75, the control device 50 resumes running of the air-supply fan 22 and the exhaust fan 24, opens the air-supply valve 21 and the exhaust valve 23 and restores the ventilation flow rate to the first ventilation flow rate. According to the ventilation control described above, running of the air-supply fan 22 and the exhaust fan 24 is resumed, and the air-supply valve 21 and the exhaust valve 23 are opened after checking satisfaction of a condition under which the vehicle-internal pressure does not change suddenly. Accordingly, increase in the vehicle-internal carbon dioxide concentration can be suppressed. Thereafter, the flow returns to Step S5.

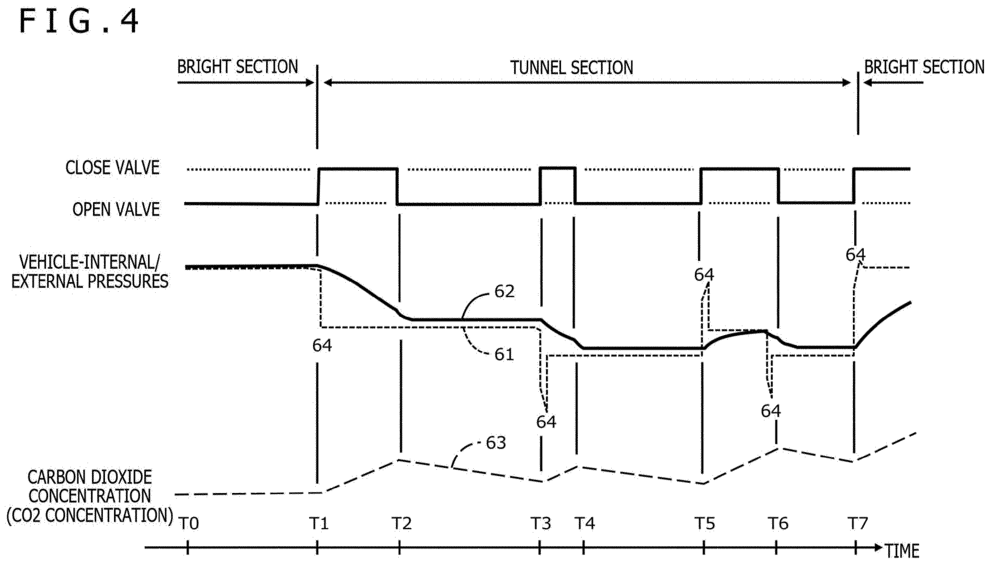

FIG. 4 is a timing chart and a graph illustrating, in association with each other, timings to open and close the air-supply/exhaust valves and the transition of vehicle-internal/external pressures and vehicle-internal carbon dioxide concentration at the time when a railway vehicle to which the first embodiment is applied passes through a tunnel. In FIG. 4, in association with time illustrated along the horizontal axis, the opened and closed states of the air-supply valve 21 and the exhaust valve 23, changes (dotted line) of a vehicle-external pressure 61 when the railway vehicle travels through a tunnel, changes (solid line) of a vehicle-internal pressure 62 when the first embodiment is applied, and changes of vehicle-internal carbon dioxide concentration 63 are illustrated.

Peaks 64 of the vehicle-external pressure occur due to reflection and reciprocation, at the entrance and exit of the tunnel, of a pressure wave generated in the tunnel when the railway vehicle enters the tunnel.

In the example illustrated in FIG. 4, the railway vehicle travels a bright section (a space outside the tunnel) from Time T0 to Time T1, travels a tunnel section from Time T1 to Time T7, and travels a bright section again after T7. Hereinafter, ventilation control in the example illustrated in FIG. 4 is explained in association with the control flow illustrated in FIG. 3.

At Time T1, upon entrance of the railway vehicle into the tunnel, when the control device 50 determines, in accordance with a sensing value of the vehicle-external-pressure sensor 51 (Step S5 in FIG. 3), that the vehicle-external-pressure variation is equal to or larger than the tolerance (determination Yes at Step S50 in FIG. 3), the control device 50 stops the air-supply fan 22 and the exhaust fan 24, and closes the air-supply valve 21 and the exhaust valve 23 (Step S55 in FIG. 3).

Furthermore, at Time T2, the control device 50 calculates, in accordance with sensing values of the vehicle-external-pressure sensor 51 and the vehicle-internal-pressure sensor 52 (Step S62 in FIG. 3), the pressure difference therebetween, and when the control device 50 determines that the difference between the vehicle-external pressure 61 and the vehicle-internal pressure 62 is within the tolerance range (determination Yes at Step S70 in FIG. 3), the control device 50 runs the air-supply fan 22 and the exhaust fan 24, and opens the air-supply valve 21 and the exhaust valve 23 (Step S75 in FIG. 3).

In addition, at Time T3, when the control device 50 determines, in accordance with a sensing value of the vehicle-external-pressure sensor 51 (Step S5 in FIG. 3), that a vehicle-external-pressure variation is equal to or larger than the tolerance (determination Yes at Step S50 in FIG. 3) due to the vehicle-external pressure lowered accompanying passage of a pressure wave reciprocating in the tunnel, the control device 50 stops the air-supply fan 22 and the exhaust fan 24, and closes the air-supply valve 21 and the exhaust valve 23 again (Step S55 in FIG. 3).

Furthermore, at Time T4, the control device 50 calculates, in accordance with sensing values of the vehicle-external-pressure sensor 51 and the vehicle-internal-pressure sensor 52 (Step S62 in FIG. 3), the pressure difference therebetween, and when the control device 50 determines that the difference between the vehicle-external pressure 61 and the vehicle-internal pressure 62 is within the tolerance range (determination Yes at Step S70 in FIG. 3), the control device 50 resumes running of the air-supply fan 22 and the exhaust fan 24 again, and opens the air-supply valve 21 and the exhaust valve 23 again (Step S75 in FIG. 3).

In addition, at Time T5, when the control device 50 determines, in accordance with a sensing value of the vehicle-external-pressure sensor 51 (Step S5 in FIG. 3), that a vehicle-external-pressure variation is equal to or larger than the tolerance (determination Yes at Step S50 in FIG. 3) due to the vehicle-external pressure rose accompanying passage of a pressure wave reciprocating in the tunnel, the control device 50 stops the air-supply fan 22 and the exhaust fan 24, and closes the air-supply valve 21 and the exhaust valve 23 again (Step S55 in FIG. 3).

Furthermore, at Time T6, the control device 50 calculates, in accordance with sensing values of the vehicle-external-pressure sensor 51 and the vehicle-internal-pressure sensor 52 (Step S62 in FIG. 3), the pressure difference therebetween, and when the control device 50 determines that the difference between the vehicle-external pressure 61 and the vehicle-internal pressure 62 is within the tolerance range (determination Yes at Step S70 in FIG. 3), the control device 50 resumes running of the air-supply fan 22 and the exhaust fan 24 again, and opens the air-supply valve 21 and the exhaust valve 23 again (Step S75 in FIG. 3).

In addition, at Time T7, when the control device 50 determines, in accordance with a sensing value of the vehicle-external-pressure sensor 51 (Step S5 in FIG. 3), that the vehicle-external pressure is lowered accompanying passage of a pressure wave reciprocating in the tunnel (determination Yes at Step S50 in FIG. 3), the control device 50 stops the air-supply fan 22 and the exhaust fan 24, and closes the air-supply valve 21 and the exhaust valve 23 again (Step S55 in FIG. 3).

Furthermore, after Time T7, although not illustrated, the control device 50 calculates, in accordance with sensing values of the vehicle-external-pressure sensor 51 and the vehicle-internal-pressure sensor 52 (Step S62 in FIG. 3), the pressure difference therebetween, and when the control device 50 determines that the difference between the vehicle-external pressure 61 and the vehicle-internal pressure 62 is within the tolerance range (determination Yes at Step S70 in FIG. 3), the control device 50 resumes running of the air-supply fan 22 and the exhaust fan 24 again, and opens the air-supply valve 21 and the exhaust valve 23 again (Step S75 in FIG. 3), and normal ventilation operation is continued.

According to the present embodiment, even in a case where the railway vehicle is subjected to a sudden change (peak 64) of the vehicle-external pressure 61 occurring during passage of the railway vehicle through the tunnel, a sudden change of the vehicle-internal pressure 62 is suppressed. Furthermore, during the time period from Time T1 to Time T7 when the railway vehicle passes through the tunnel, the only time periods during which ventilation is stopped are the time periods from Time T1 to Time T2, from Time T3 to Time T4, and from Time T5 to Time T6, and ventilation is resumed during the time periods from Time T2 to Time T3, from Time T4 to Time T5, and from Time T6 to Time T7. Accordingly, significant increase in the vehicle-internal carbon dioxide concentration 63 can also be suppressed as illustrated by the graph of the vehicle-internal carbon dioxide concentration 63.

As mentioned above, by shutting off the air-supply valve 21 and the exhaust valve 23 when the vehicle-external pressure change is equal to or larger than the tolerance, the ventilation flow rate is set to the second ventilation flow rate, and propagation of the sudden pressure change outside the vehicle to the inside of the vehicle is suppressed. Thereafter, when the pressure difference between the inside of the vehicle and the outside of the vehicle is within a tolerance range, the air-supply valve 21 and the exhaust valve 23 are opened to restore the ventilation flow rate to the first ventilation flow rate. Thereby, sudden pressure changes inside the vehicle that result from opening of the air-supply valve 21 described above and the exhaust valve 23 described above can be suppressed.

In addition, according to the present embodiment, it is possible to avoid stopping ventilation for a long time. Accordingly, air inside the vehicle can be kept clean. Thereby, a comfortable railway vehicle with suppressed sudden pressure variations and suppressed contamination of the air inside the vehicle can be provided.

### [Second Embodiment]

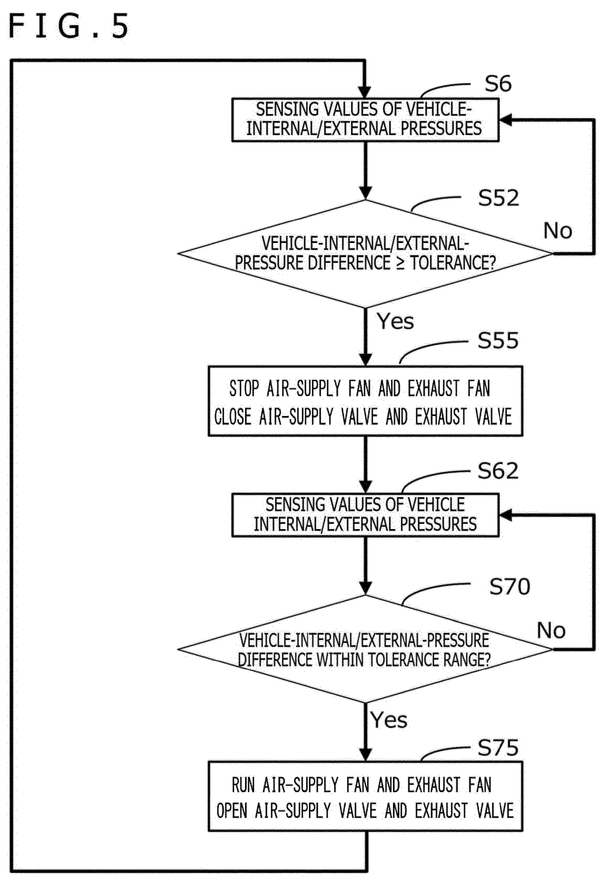

FIG. 5 illustrates a control flow of a ventilation manner in a second embodiment of the present invention. In the first embodiment described above, in a case where a variation in sensing values of the vehicle-external-pressure sensor 51 (or the vehicle-external pressure based on the sensing values) is equal to or larger than a preset tolerance, control is executed to send signals to stop the air-supply fan 22 and the exhaust fan 24 and close the air-supply valve 21 and the exhaust valve 23 to shut off an air path for communication with the outside of the vehicle or reduce the opening area thereof.

In contrast to this, in the second embodiment, control is executed in a case where the difference between sensing values of the vehicle-external-pressure sensor 51 and the vehicle-internal-pressure sensor 52 is equal to or larger than a tolerance range, while the same ventilation system as that in the first embodiment is used.

Explaining more specifically, at Step S6, the control device 50 obtains sensing values of the vehicle-external-pressure sensor 51 and the vehicle-internal-pressure sensor 52, and calculates the internal/external-pressure difference. At Step S52, the control device 50 determines whether or not the internal/external-pressure difference is equal to or larger than a preset tolerance. In a case where it is determined that the internal/external-pressure difference is smaller than a preset tolerance, the flow returns to Step S6, and the control device 50 receives next sensing values of the vehicle-external-pressure sensor 51 and the vehicle-internal-pressure sensor 52.

On the other hand, in a case where it is determined at Step S52 that the internal/external-pressure difference is equal to or larger than the preset tolerance, at Step S55, the control device 50 stops the air-supply fan 22 and the exhaust fan 24, closes the air-supply valve 21 and the exhaust valve 23, and shuts off an air path for communication with the outside of the vehicle or reduces the opening area thereof. Subsequent Steps S62, S70 and S75 are similar to those in the first embodiment mentioned above. Accordingly, overlapping explanations are omitted.

Although in the control technique illustrated in the second embodiment mentioned thus far, similar to the first embodiment, the air-supply fan 22 and the exhaust fan 24 are stopped when the air-supply valve 21 and the exhaust valve 23 are closed, the air-supply valve 21 and the exhaust valve 23 may be closed while the air-supply fan 22 and the exhaust fan 24 are kept running. With the ventilation control mentioned thus far, effects that are equivalent to those in the first embodiment can be attained.

### [Third Embodiment]

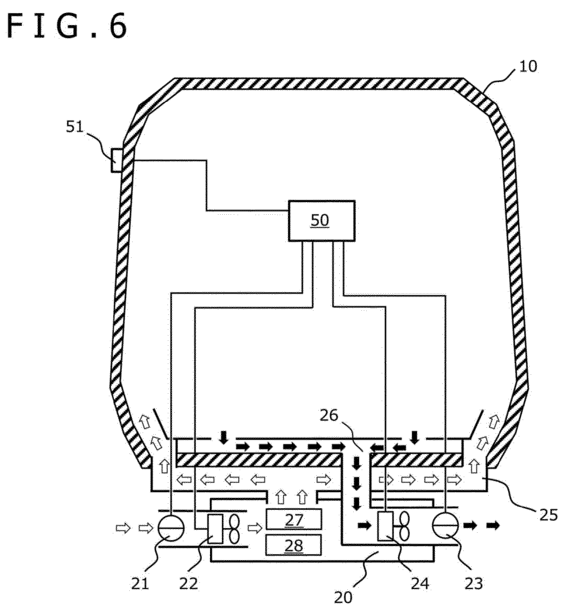

FIG. 6 is a schematic cross-sectional view of the railway vehicle 10 on which a ventilation system according to a third embodiment is mounted. The vehicle-internal-pressure sensor 52 that is arranged inside the vehicle in the first embodiment is not provided in the third embodiment. In other respects, the configuration is identical to the configuration in the first embodiment. Accordingly, overlapping explanations are omitted.

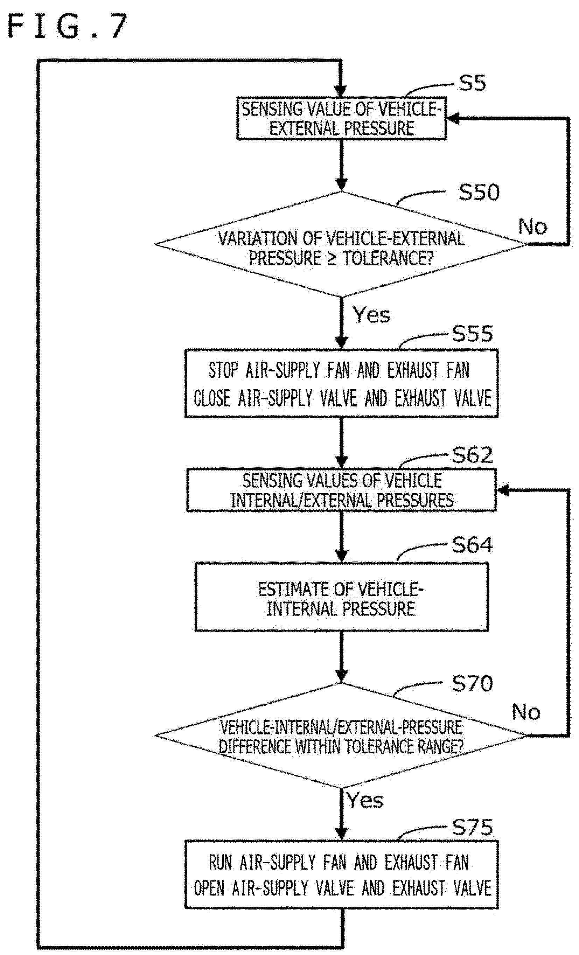

FIG. 7 illustrates a control flow of a ventilation method in the third embodiment. At Step S5, the control device 50 obtains a sensing value of the vehicle-external-pressure sensor 51. At Step S50, the control device 50 determines whether or not a vehicle-external-pressure variation is equal to or larger than a preset tolerance on the basis of the obtained sensing value. In a case where it is determined that the vehicle-external-pressure variation is smaller than the preset tolerance, the flow returns to Step S5, and the control device 50 receives a next sensing value of the vehicle-external-pressure sensor 51.

On the other hand, in a case where it is determined at Step S50 that the vehicle-external-pressure variation is equal to or larger than the preset tolerance, at Step S55, the control device 50 stops the air-supply fan 22 and the exhaust fan 24, and closes the air-supply valve 21 and the exhaust valve 23, to shut off an air path for communication with the outside of the vehicle or reduce the opening area thereof. With the ventilation control described above, it is possible to suppress propagation of sudden pressure changes occurred outside the vehicle to the inside of the vehicle.

Furthermore, at Step S62, the control device 50 calculates and estimates the vehicle-internal pressure from a sensing value of the vehicle-external-pressure sensor 51 on the basis of simulation, experimental results and the like. That is, the vehicle-external-pressure sensor 51 doubles as the vehicle-external-pressure information acquiring section and the vehicle-internal-pressure information acquiring section. At subsequent Step S64, the control device 50 calculates the internal/external-pressure difference between the vehicle-external pressure based on the sensing value of the vehicle-external-pressure sensor 51 and the estimated vehicle-internal pressure. Note that, instead of Step S50, when it is determined that the difference between the sensing value of the vehicle-external-pressure sensor 51 and the estimated vehicle-internal-pressure value is outside the predetermined tolerance range, the control device 50 may execute Step S55, and change the ventilation flow rate to the second ventilation flow rate.

In addition, at Step S70, it is determined whether or not the internal/external-pressure difference is within the preset tolerance range. In a case where it is determined that the difference is outside the preset tolerance range, the flow returns to Step S62, and the control device 50 executes similar steps.

In contrast to this, in a case where it is determined at Step S70 that the internal/external-pressure difference is within the preset tolerance range, at Step S75, the control device 50 resumes running of the air-supply fan 22 and the exhaust fan 24, and opens the air-supply valve 21 and the exhaust valve 23. With the ventilation control described above, sudden pressure changes inside the vehicle that result from opening of the air-supply valve 21 and the exhaust valve 23 can be suppressed. Thereafter, the flow returns to Step S5.

According to the third embodiment, in addition to the attainment of effects that are equivalent to those in the first embodiment, the number of parts can be reduced as a result of reduction in the number of sensors since it becomes unnecessary to provide a vehicle-internal-pressure sensor by performing calculation to estimate the vehicle-internal pressure from the vehicle-external-pressure sensor 51. Thereby, the number of parts that may possibly malfunction can be reduced, and highly reliable railway vehicles can be provided.

### [Fourth Embodiment]

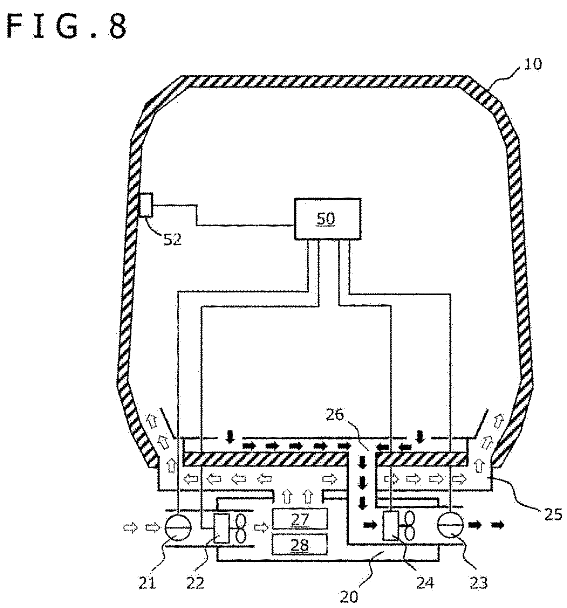

FIG. 8 is a schematic cross-sectional view of the railway vehicle 10 on which a ventilation system according to a fourth embodiment is mounted. The vehicle-external-pressure sensor 51 that is arranged outside the vehicle in the first embodiment is not provided in the third embodiment. In other respects, the configuration is identical to the configuration in the first embodiment. Accordingly, overlapping explanations are omitted.

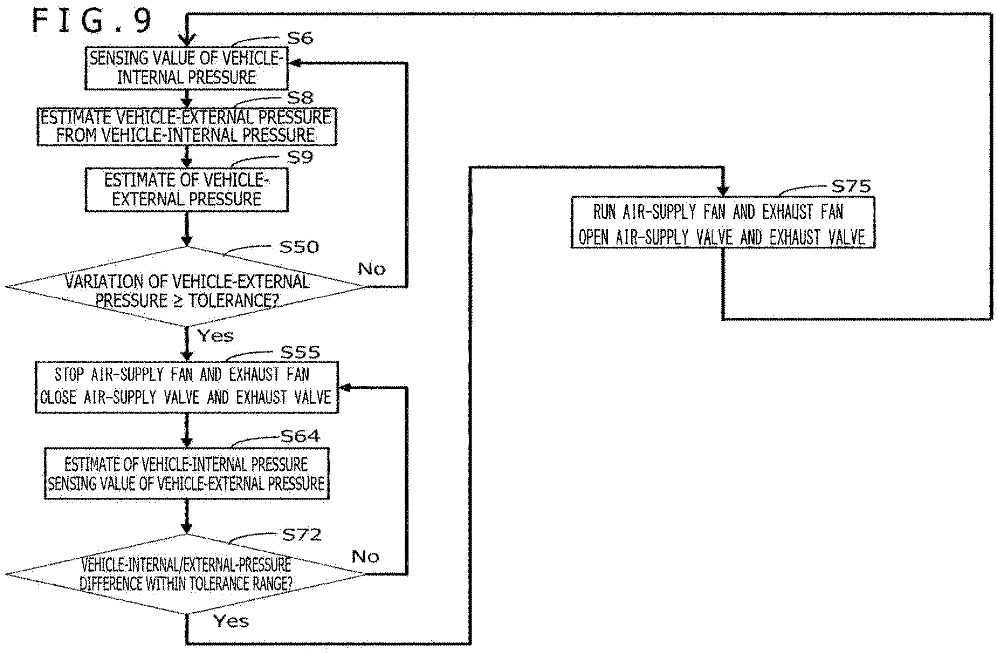

FIG. 9 illustrates a control flow of a ventilation method in the fourth embodiment. At Step S6, the control device 50 receives a sensing value of the vehicle-internal-pressure sensor 52. At subsequent Step S8, the control device 50 calculates the vehicle-external pressure from the sensing value of the vehicle-internal-pressure sensor 52 on the basis of simulation, experimental results and the like. At Step S9, the control device 50 obtains an estimate of the vehicle-external pressure.

Furthermore, at Step S50, the control device 50 determines whether or not a vehicle-external-pressure variation is equal to or larger than a preset tolerance on the basis of the estimate. In a case where it is determined that the vehicle-external-pressure variation is smaller than the preset tolerance, the flow returns to Step S6, and the control device 50 receives a next sensing value of the vehicle-internal-pressure sensor 52, and similarly obtains an estimate of the vehicle-external pressure.

On the other hand, in a case where it is determined at Step S50 that the vehicle-external-pressure variation is equal to or larger than the preset tolerance, at Step S55, the control device 50 stops the air-supply fan 22 and the exhaust fan 24, and closes the air-supply valve 21 and the exhaust valve 23, to shut off an air path for communication with the outside of the vehicle or reduce the opening area thereof. With the ventilation control described above, it is possible to suppress propagation of sudden pressure changes occurred outside the vehicle to the inside of the vehicle. Note that, instead of Step S50, when it is determined that the difference between the estimated vehicle-external-pressure value and the sensing value of the vehicle-internal-pressure sensor 52 is outside the tolerance range, the control device 50 may execute Step S55, and change the ventilation flow rate to the second ventilation flow rate.

Although in the technique illustrated here, a variation in the vehicle-external pressure is calculated from the sensing value of the vehicle-internal-pressure sensor 52 (Step S8), and the air-supply fan 22 and the exhaust fan 24 are stopped depending on the amount of the variation, a technique of controlling the fans to stop depending on a variation in sensing values of the vehicle-internal-pressure sensor 52 may be used.

Furthermore, at Step S64, the control device 50 calculates the internal/external-pressure difference between the sensing value of the vehicle-internal-pressure sensor 52 and the vehicle-external pressure estimated on the basis of the sensing value of the vehicle-internal-pressure sensor 52.

At subsequent Step S72, it is determined whether or not the internal/external-pressure difference is within the preset tolerance range. In a case where it is determined that the internal/external-pressure difference is outside the preset tolerance range, the flow returns to Step S55, and the control device 50 executes similar steps.

In contrast to this, in a case where it is determined at Step S72 that the internal/external-pressure difference is within the preset tolerance range, at Step S75, the control device 50 runs the air-supply fan 22 and the exhaust fan 24, and opens the air-supply valve 21 and the exhaust valve 23 to open the air path for communication with the outside of the vehicle. With the ventilation control described above, sudden pressure changes inside the vehicle that result from opening of the air-supply valve 21 and the exhaust valve 23 can be suppressed. Thereafter, the flow returns to Step S6.

According to the fourth embodiment, in addition to the attainment of effects that are equivalent to those in the first embodiment, the number of parts can be reduced as a result of reduction in the number of sensors since it becomes unnecessary to provide a vehicle-internal-pressure sensor by performing calculation to estimate the vehicle-internal pressure from the vehicle-external-pressure sensor 51. Thereby, the number of parts that may possibly malfunction can be reduced, and highly reliable railway vehicles can be provided.

### [Fifth Embodiment]

The vehicle-external-pressure sensor 51 that is arranged outside the vehicle in the first embodiment is not provided in a fifth embodiment. In other respects, the configuration is identical to the configuration in the first embodiment. Accordingly, overlapping explanations are omitted.

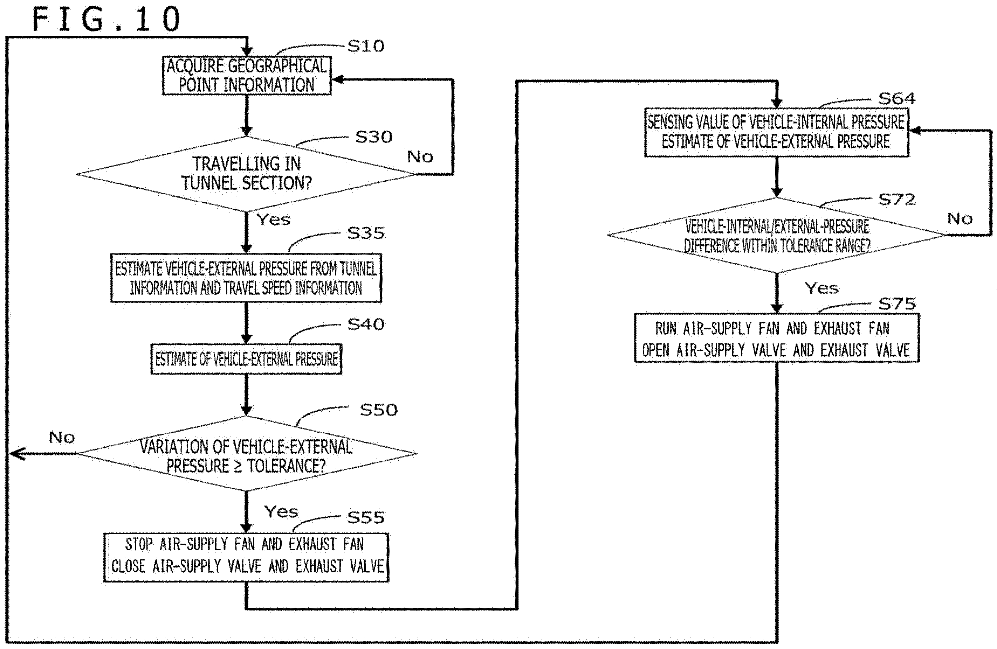

FIG. 10 illustrates a control flow of a ventilation method in the fifth embodiment. At Step S10, the control device 50 acquires geographical point information during travelling of the vehicle. At subsequent Step S30, the control device 50 decides whether the vehicle is travelling a tunnel section or a bright section by referring also to tunnel (geographical point) information acquired in advance.

In a case where it is determined that the vehicle is travelling a tunnel section (determination Yes at Step S30), at Step S35, the control device 50 doubling as the vehicle-external-pressure information acquiring section calculates the vehicle-external pressure and its variation from the cross-sectional area and/or entire length of the tunnel (tunnel information), and vehicle travel speed information. At Step S40, the control device 50 obtains a computed value of the vehicle-external pressure (vehicle-external-pressure information).

At Step S50, the control device 50 determines whether or not a vehicle-external-pressure variation is equal to or larger than a preset tolerance on the basis of the computed value. In a case where it is determined that the vehicle-external-pressure variation is smaller than the preset tolerance, the flow returns to Step S10, and similar steps are executed.

On the other hand, in a case where it is determined at Step S50 that the vehicle-external-pressure variation is equal to or larger than the preset tolerance, at Step S55, the control device 50 sends signals to stop the air-supply fan 22 and the exhaust fan 24, and close the air-supply valve 21 and the exhaust valve 23 to shut off an air path for communication with the outside of the vehicle or reduce the opening area thereof. With the ventilation control described above, it is possible to suppress propagation of sudden pressure changes occurred outside the vehicle to the inside of the vehicle.

Note that although the decision about a tunnel travelling section, and the computation of the vehicle-external pressure are described above as part of control performed at the control device 50 provided in the vehicle, in other possible control, the decision and the computation are performed on the ground side, and the information is transmitted to the vehicle. In addition, by storing the tunnel information, travel speeds, and vehicle-external pressures to be produced under particular corresponding conditions in a database in advance, it is possible to compute the vehicle-external pressure only from geographical point information.

Furthermore, at Step S64, the control device 50 calculates the internal/external-pressure difference between the computed value of the vehicle-external pressure, and a sensing value of the vehicle-internal-pressure sensor 52 constituting the vehicle-internal-pressure information acquiring section (vehicle-internal-pressure information).

In addition, at Step S72, the control device 50 determines whether or not the internal/external-pressure difference is within the preset tolerance range. In a case where it is determined that the internal/external-pressure difference is outside the preset tolerance range, the flow returns to Step S64, and the control device 50 continues calculation of the internal/external-pressure difference.

In contrast to this, in a case where it is determined at Step S72 that the internal/external-pressure difference is within the preset tolerance range, at Step S75, the control device 50 resumes running of the air-supply fan 22 and the exhaust fan 24, and opens the air-supply valve 21 and the exhaust valve 23 to open the air path for communication with the outside of the vehicle. With the ventilation control described above, sudden pressure changes inside the vehicle that result from opening of the air-supply valve 21 and the exhaust valve 23 can be suppressed. Thereafter, the flow returns to Step S10.

According to the fifth embodiment, in addition to the attainment of effects that are equivalent to those in the first embodiment, the number of parts can be reduced as a result of reduction in the number of sensors since it becomes unnecessary to provide a vehicle-external-pressure sensor by computing the vehicle-external pressure from the tunnel information and/or the travel speed information. Thereby, the number of parts that may possibly malfunction can be reduced, and highly reliable railway vehicles can be provided.

### [Sixth Embodiment]

The vehicle-external-pressure sensor 51 that is arranged outside the vehicle, and the vehicle-internal-pressure sensor 52 that is arranged inside the vehicle in the first embodiment are not provided in a sixth embodiment. In other respects, the configuration is identical to the configuration in the first embodiment. Accordingly, overlapping explanations are omitted.

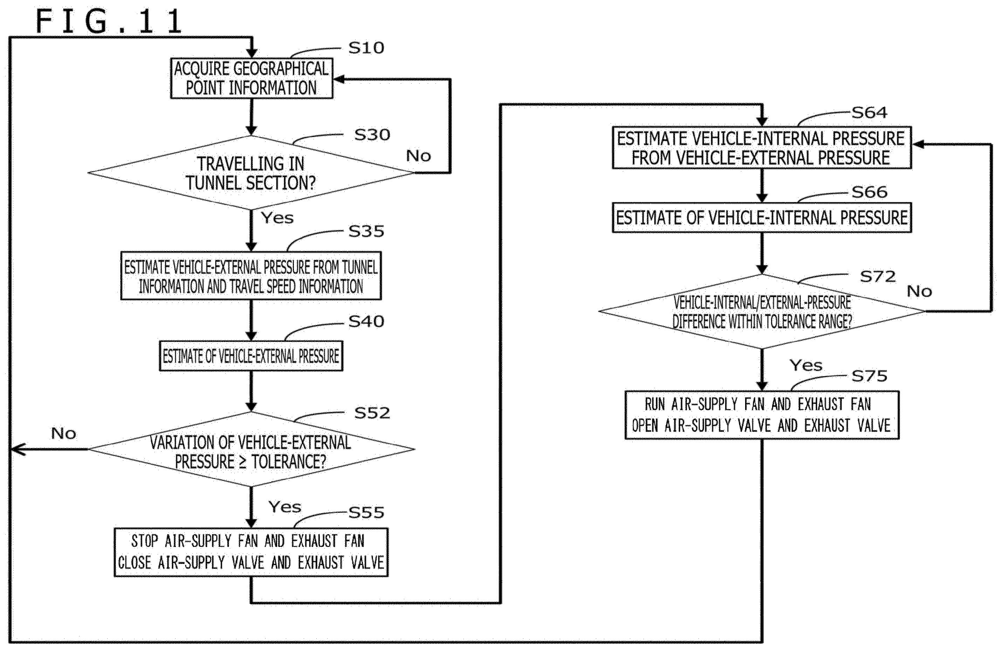

FIG. 11 illustrates a control flow of a ventilation method in the sixth embodiment. At Step S10, the control device 50 acquires geographical point information during travelling of the vehicle. At subsequent Step S30, the control device 50 decides whether the vehicle is travelling a tunnel section or a bright section by referring also to tunnel information acquired in advance.

In a case where it is determined that the vehicle is travelling a tunnel section (determination Yes at Step S30), at Step S35, the control device 50 doubling as the vehicle-external-pressure information acquiring section calculates the vehicle-external pressure and its variation from the cross-sectional area and/or entire length of the tunnel and vehicle travel speed information. At Step S40, the control device 50 obtains a computed value of the vehicle-external pressure (vehicle-external-pressure information).

At Step S52, the control device 50 determines whether or not the vehicle-external-pressure variation is equal to or larger than a preset tolerance on the basis of the computed value. In a case where it is determined that the vehicle-external-pressure variation is smaller than the preset tolerance, the flow returns to Step S10, and similar steps are executed.

On the other hand, in a case where it is determined at Step S52 that the vehicle-external-pressure variation is equal to or larger than the preset tolerance, at Step S55, the control device 50 closes the air-supply valve 21 and the exhaust valve 23 to shut off an air path for communication with the outside of the vehicle or reduce the opening area thereof. With the ventilation control described above, it is possible to suppress propagation of sudden pressure changes occurred outside the vehicle to the inside of the vehicle.

Note that although the decision about a tunnel travelling section, and the computation of the vehicle-external pressure are described above as part of control performed at the control device 50 provided in the vehicle, in other possible control, the decision and the computation are performed on the ground side, and the information is transmitted to the vehicle. In addition, by storing the tunnel information, travel speeds, and vehicle-external pressures to be produced under particular corresponding conditions in a database in advance, it is possible to compute the vehicle-external pressure only from geographical point information.

Furthermore, at Step S64, the control device 50 doubling as the vehicle-internal-pressure information acquiring section estimates the vehicle-internal pressure from the computed vehicle-external pressure. At Step S66, the control device 50 obtains the internal/external-pressure difference between the computed value of the vehicle-external pressure and the estimate of the vehicle-internal pressure (vehicle-internal-pressure information).

In addition, at Step S72, the control device 50 determines whether or not the internal/external-pressure difference is within the preset tolerance range. In a case where it is determined that the internal/external-pressure difference is outside the preset tolerance range, the flow returns to Step S64, and the control device 50 continues calculation of the internal/external-pressure difference.

In contrast to this, in a case where it is determined at Step S72 that the internal/external-pressure difference is within the preset tolerance range, at Step S75, the control device 50 resumes running of the air-supply fan 22 and the exhaust fan 24, and opens the air-supply valve 21 and the exhaust valve 23 to open the air path for communication with the outside of the vehicle. With the ventilation control described above, sudden pressure changes inside the vehicle that result from opening of the air-supply valve 21 and the exhaust valve 23 can be suppressed. Thereafter, the flow returns to Step S10.

According to the sixth embodiment, in addition to the attainment of effects equivalent to those in the first embodiment, the number of parts can be reduced since pressure sensors become unnecessary by computing the vehicle-external pressure from tunnel information and/or travel speed information and estimating the vehicle-internal pressure from the computed vehicle-external pressure. Thereby, the number of parts that may possibly malfunction can be reduced, and highly reliable railway vehicles can be provided.

As is apparent from the embodiments mentioned thus far, according to the present invention, it is possible to provide a railway-vehicle ventilation system that can maintain comfortableness even in a case where a high-performance blower is not used, by suppressing sudden pressure variations inside the vehicle and suppressing increase in carbon dioxide gas concentration inside the vehicle by control of an air-supply valve provided on an air-supply path and an exhaust valve provided on an exhaust path that are related to ventilation.

Note that the present invention is not limited to the embodiments described above, but includes various variants. For example, the embodiments described above are explained in detail for explaining the present invention in an easy-to-understand manner, and embodiments of the present invention are not necessarily limited to those including all the configurations explained. In addition, some of the configurations of an embodiment can be replaced with the configurations of another embodiment, and in addition a configuration of an embodiment can be added to the configurations of another embodiment. In addition, some of the configurations of each embodiment can be subjected to addition, deletion or replacement of other configurations.

### Description of Reference Characters

- 10:: Railway vehicle
- 20:: Air-conditioning device
- 21:: Air-supply valve
- 22:: Air-supply fan
- 23:: Exhaust valve
- 24:: Exhaust fan
- 25:: Conditioned-air duct
- 26:: Exhaust duct
- 27:: Heat exchanger
- 28:: Heater
- 50:: Control device
- 51:: Vehicle-external-pressure sensor
- 52:: Vehicle-internal-pressure sensor
- 61:: Vehicle-external pressure
- 62:: Vehicle-internal pressure
- 63:: Vehicle-internal carbon dioxide concentration
- 64:: Peak of vehicle-external pressure
- 70:: Leaking air
- 72:: Valve
- 74:: Abutting edge
- 76:: Packing
- 78:: Valve operation section
- 79:: Connecting section

## Claims

1. A rail-vehicle ventilation system comprising:
a ventilating section that ventilates air inside and outside a rail vehicle (10);
a flow-rate adjusting section that adjusts a ventilation flow rate of ventilation by the ventilating section between a first ventilation flow rate and a second ventilation flow rate lower than the first ventilation flow rate;
a control section (50) that controls the flow-rate adjusting section;
a vehicle-external-pressure information acquiring section (51) that acquires vehicle-external-pressure (61) information of the rail vehicle; and
a vehicle-internal-pressure (62) information acquiring section (52) that acquires vehicle-internal-pressure information of the rail vehicle, wherein
when it is determined that a difference between the vehicle-external-pressure information and the vehicle-internal-pressure information is within a tolerance range after the flow-rate adjusting section sets the ventilation flow rate to the second ventilation flow rate, the control section controls the flow-rate adjusting section to restore the ventilation flow rate to the first ventilation flow rate
wherein the flow-rate adjusting section includes a connecting section (79) connected to a duct through which air flows, and a valve operation section (78) connected to the connecting section, and
wherein the valve operation section includes a movable valve (72), an abutting edge (74) against which the valve abuts,
**characterised in that** either: packings (76) are provided discretely over an entire circumference of the abutting edge with gaps between adjacent packings for flow of leaking air (70), or a small opening (72a) is formed through the valve (72) for flow of leaking air (70).

2. The rail-vehicle ventilation system according to claim 1, wherein
the vehicle-external-pressure (61) information is a sensing value sensed by a vehicle-external-pressure sensor (51) provided outside the rail vehicle (10),
the vehicle-internal-pressure (62) information is a sensing value sensed by a vehicle-internal-pressure sensor (52) provided inside the rail vehicle, and
when it is determined that a vehicle-external pressure (61) based on the sensing value of the vehicle-external-pressure sensor has varied by an amount greater than a predetermined tolerance, the control section (50) controls the flow-rate adjusting section to set the ventilation flow rate to the second ventilation flow rate.

3. The rail-vehicle ventilation system according to claim 1, wherein
the vehicle-external-pressure (61) information is a sensing value sensed by a vehicle-external-pressure sensor (51) provided outside the rail vehicle (10),
the vehicle-internal-pressure (62) information is a sensing value sensed by a vehicle-internal-pressure sensor (52) provided inside the rail vehicle, and
the control section (50) compares a vehicle-external pressure (61) based on the sensing value of the vehicle-external-pressure sensor and a vehicle-internal pressure (62) based on the sensing value of the vehicle-internal-pressure sensor, and when it is determined that a difference between the vehicle-external pressure and the vehicle-internal pressure is outside a tolerance range, the control section controls the flow-rate adjusting section to set the ventilation flow rate to the second ventilation flow rate.

4. The rail-vehicle ventilation system according to claim 1, wherein
the vehicle-external-pressure (61) information is a sensing value sensed by a vehicle-external-pressure sensor (51) provided outside the rail vehicle (10),
the vehicle-internal-pressure (62) information is a vehicle-internal-pressure value estimated on a basis of the sensing value of the vehicle-external-pressure sensor, and
the control section (50) compares the sensing value of the vehicle-external-pressure sensor and the estimated vehicle-internal-pressure value, and when it is determined that a difference between the sensing value and the estimated vehicle-internal-pressure value is outside a tolerance range, the control section controls the flow-rate adjusting section to set the ventilation flow rate to the second ventilation flow rate.

5. The rail-vehicle ventilation system according to claim 1, wherein
the vehicle-external-pressure (61) information is a vehicle-external-pressure value estimated on a basis of a sensing value sensed by a vehicle-internal-pressure sensor (52) provided inside the rail vehicle (10),
the vehicle-internal-pressure (62) information is the sensing value sensed by the vehicle-internal-pressure sensor, and
the control section compares the estimated vehicle-external-pressure value and the sensing value of the vehicle-internal-pressure sensor, and when it is determined that a difference between the estimated vehicle-external-pressure value and the sensing value is outside a tolerance range, the control section controls the flow-rate adjusting section to set the ventilation flow rate to the second ventilation flow rate.

6. The rail-vehicle ventilation system according to claim 1, wherein
the vehicle-external-pressure (61) information is a vehicle-external-pressure value computed on a basis of tunnel information and speed information,
the vehicle-internal-pressure (62) information is a sensing value sensed by a vehicle-internal-pressure sensor (52) provided inside the rail vehicle (10), and
when it is determined that the computed vehicle-external-pressure (61) value has varied by an amount greater than a predetermined tolerance, the control section (50) controls the flow-rate adjusting section to set the ventilation flow rate to the second ventilation flow rate.

7. The rail-vehicle ventilation system according to claim 1, wherein
the vehicle-external-pressure (61) information is a vehicle-external-pressure value computed on a basis of tunnel information and speed information,
the vehicle-internal-pressure (62) information is a vehicle-internal-pressure value estimated on a basis of the computed vehicle-external-pressure value, and
when it is determined that the computed vehicle-external-pressure value has varied by an amount greater than a predetermined tolerance, the control section controls the flow-rate adjusting section to set the ventilation flow rate to the second ventilation flow rate.

## Patentansprüche

1. Schienenfahrzeuglüftungssystem, umfassend:
einen Lüftungsabschnitt, der Luft in ein Schienenfahrzeug (10) hinein und aus diesem heraus leitet;
einen Strömungsratenanpassungsabschnitt, der eine Lüftungsströmungsrate einer Lüftung durch den Lüftungsabschnitt zwischen einer ersten Lüftungsströmungsrate und einer zweiten Lüftungsströmungsrate, die geringer ist als die erste Lüftungsströmungsrate, anpasst;
einen Steuerabschnitt (50), der den Strömungsratenanpassungsabschnitt steuert;
einen Fahrzeugaußendruckinformationserfassungsabschnitt (51), der Fahrzeugaußendruck- (61) Informationen des Schienenfahrzeugs erfasst; und
einen Fahrzeuginnendruck- (62) Informationserfassungsabschnitt (52), der Fahrzeuginnendruckinformationen des Schienenfahrzeugs erfasst, wobei
wenn bestimmt wird, dass eine Differenz zwischen den Fahrzeugaußendruckinformationen und den Fahrzeuginnendruckinformationen innerhalb eines Toleranzbereichs liegt, nachdem der Strömungsratenanpassungsabschnitt die Lüftungsströmungsrate auf die zweite Lüftungsströmungsrate eingestellt hat, der Steuerabschnitt den Strömungsratenanpassungsabschnitt steuert, um die Lüftungsströmungsrate auf die erste Lüftungsströmungsrate zurückzusetzen,
wobei der Strömungsratenanpassungsabschnitt einen Verbindungsabschnitt (79), der mit einer Leitung verbunden ist, durch welche Luft strömt, und einen Ventilbetriebsabschnitt (78), der mit dem Verbindungsabschnitt verbunden ist, umfasst und
wobei der Ventilbetriebsabschnitt ein bewegbares Ventil (72), eine Stoßkante (74), an der das Ventil in Anlage gebracht ist, umfasst,
**dadurch gekennzeichnet, dass** entweder Dichtungen (76) einzeln über einen gesamten Umfang der Stoßkante bereitgestellt sind, wobei zwischen benachbarten Dichtungen Spalte zum Strömen von austretender Luft (70) angeordnet sind, oder eine kleine Öffnung (72a) zum Strömen von austretender Luft (70) durch das Ventil (72) hindurch ausgebildet ist.

2. Schienenfahrzeuglüftungssystem nach Anspruch 1, wobei
die Fahrzeugaußendruck- (61) Informationen ein Abfühlwert sind, der von einem außerhalb des Schienenfahrzeugs (10) bereitgestellten Fahrzeugaußendrucksensor (51) abgefühlt wird,
die Fahrzeuginnendruck- (62) Informationen ein Abfühlwert sind, der von einem innerhalb des Schienenfahrzeugs bereitgestellten Fahrzeuginnendrucksensor (52) abgefühlt wird, und
wenn bestimmt wird, dass sich ein Fahrzeugaußendruck (61) beruhend auf dem Abfühlwert des Fahrzeugaußendrucksensor um ein Ausmaß, das größer als eine vorbestimmte Toleranz ist, geändert hat, der Steuerabschnitt (50) den Strömungsratenanpassungsabschnitt steuert, um die Lüftungsströmungsrate auf die zweite Lüftungsströmungsrate einzustellen.

3. Schienenfahrzeuglüftungssystem nach Anspruch 1, wobei
die Fahrzeugaußendruck- (61) Informationen ein Abfühlwert sind, der von einem außerhalb des Schienenfahrzeugs (10) bereitgestellten Fahrzeugaußendrucksensor (51) abgefühlt wird,
die Fahrzeuginnendruck- (62) Informationen ein Abfühlwert sind, der von einem innerhalb des Schienenfahrzeugs bereitgestellten Fahrzeuginnendrucksensor (52) abgefühlt wird, und
der Steuerabschnitt (50) einen Fahrzeugaußendruck (61) beruhend auf dem Abfühlwert des Fahrzeugaußendrucksensors und einen Fahrzeuginnendruck (62) beruhend auf dem Abfühlwert des Fahrzeuginnendrucksensors miteinander vergleicht, und wobei, wenn bestimmt wird, dass eine Differenz zwischen dem Fahrzeugaußendruck und dem Fahrzeuginnendruck außerhalb eines Toleranzbereichs liegt, der Steuerabschnitt den Strömungsratenanpassungsabschnitt steuert, um die Lüftungsströmungsrate auf die zweite Lüftungsströmungsrate einzustellen.

4. Schienenfahrzeuglüftungssystem nach Anspruch 1, wobei
die Fahrzeugaußendruck- (61) Informationen ein Abfühlwert sind, der von einem außerhalb des Schienenfahrzeugs (10) bereitgestellten Fahrzeugaußendrucksensor (51) abgefühlt wird,
die Fahrzeuginnendruck- (62) Informationen ein Fahrzeuginnendruckwert sind, der beruhend auf dem Abfühlwert des Fahrzeugaußendrucksensors geschätzt wird, und
der Steuerabschnitt (50) den Abfühlwert des Fahrzeugaußendrucksensors und den geschätzten Fahrzeuginnendruckwert miteinander vergleicht, und wobei, wenn bestimmt wird, dass eine Differenz zwischen dem Abfühlwert und dem geschätzten Fahrzeuginnendruckwert außerhalb eines Toleranzbereichs liegt, der Steuerabschnitt den Strömungsratenanpassungsabschnitt steuert, um die Lüftungsströmungsrate auf die zweite Lüftungsströmungsrate einzustellen.

5. Schienenfahrzeuglüftungssystem nach Anspruch 1, wobei
die Fahrzeugaußendruck- (61) Informationen ein Fahrzeugaußendruckwert sind, der beruhend auf einem Abfühlwert, welcher durch einen innerhalb des Schienenfahrzeugs (10) bereitgestellten Fahrzeuginnendrucksensor (52) abgefühlt wird, geschätzt wird,
die Fahrzeuginnendruck- (62) Informationen der Abfühlwert sind, der vom Fahrzeuginnendrucksensor abgefühlt wurde, und
der Steuerabschnitt den geschätzten Fahrzeugaußendruckwert und den Abfühlwert des Fahrzeuginnendrucksensors miteinander vergleicht, und wobei, wenn bestimmt wird, dass eine Differenz zwischen dem geschätzten Fahrzeugaußendruckwert und dem Abfühlwert außerhalb eines Toleranzbereichs liegt, der Steuerabschnitt den Strömungsratenanpassungsabschnitt steuert, um die Lüftungsströmungsrate auf die zweite Lüftungsströmungsrate einzustellen.

6. Schienenfahrzeuglüftungssystem nach Anspruch 1, wobei
die Fahrzeugaußendruck- (61) Informationen ein Fahrzeugaußendruckwert sind, der beruhend auf Tunnelinformationen und Geschwindigkeitsinformationen berechnet wird,
die Fahrzeuginnendruck- (62) Informationen ein Abfühlwert sind, der durch einen innerhalb des Schienenfahrzeugs (10) bereitgestellten Fahrzeuginnendrucksensor (52) abgefühlt wird, und,
wenn bestimmt wird, dass sich der berechnete Fahrzeugaußendruck- (61) Wert um ein Ausmaß, das größer als eine vorbestimmte Toleranz ist, geändert hat, der Steuerabschnitt (50) den Strömungsratenanpassungsabschnitt steuert, um die Lüftungsströmungsrate auf die zweite Lüftungsströmungsrate einzustellen.

7. Schienenfahrzeuglüftungssystem nach Anspruch 1, wobei
die Fahrzeugaußendruck- (61) Informationen ein Fahrzeugaußendruckwert sind, der beruhend auf Tunnelinformationen und Geschwindigkeitsinformationen berechnet wird,
die Fahrzeuginnendruck- (62) Informationen ein Fahrzeuginnendruckwert sind, der beruhend auf dem berechneten Fahrzeugaußendruckwert berechnet wird, und,
wenn bestimmt wird, dass sich der berechnete Fahrzeugaußendruckwert um ein Ausmaß, das größer als eine vorbestimmte Toleranz ist, geändert hat, der Steuerabschnitt den Strömungsratenanpassungsabschnitt steuert, um die Lüftungsströmungsrate auf die zweite Lüftungsströmungsrate einzustellen.

## Revendications

1. Système de ventilation de véhicule ferroviaire, comprenant :
une section de ventilation qui ventile de l'air à l'intérieur et à l'extérieur d'un véhicule ferroviaire (10) ;
une section d'ajustement de débit d'écoulement qui ajuste un débit d'écoulement de ventilation par l'intermédiaire de la section de ventilation entre un premier un débit d'écoulement de ventilation et un second débit d'écoulement de ventilation inférieur au premier débit d'écoulement de ventilation ;
une section de commande (50) qui commande la section d'ajustement de débit d'écoulement ;
une section d'acquisition d'informations de pression externe de véhicule (51) qui acquiert des informations de pression externe de véhicule (61) du véhicule ferroviaire ; et
une section (52) d'acquisition d'informations de pression interne de véhicule (62) qui acquiert des informations de pression interne de véhicule du véhicule ferroviaire, dans lequel
lorsqu'il est déterminé qu'une différence entre les informations de pression externe de véhicule et les informations de pression interne de véhicule se situe dans une plage de tolérance après que la section d'ajustement du débit d'écoulement ait réglé le débit d'écoulement de ventilation au second débit d'écoulement de ventilation, la section de commande commande la section d'ajustement de débit d'écoulement pour rétablir le débit d'écoulement de ventilation au premier débit d'écoulement de ventilation
dans lequel la section d'ajustement de débit d'écoulement inclut une section de connexion (79) connectée à un conduit à travers lequel de l'air s'écoule, et une section d'actionnement de vanne (78) connectée à la section de connexion, et
dans lequel la section d'actionnement de vanne inclut une vanne mobile (72), un bord de butée (74) contre lequel la vanne vient en butée,
**caractérisé en ce que** soit : des garnitures (76) sont prévues discrètement sur toute une circonférence du bord de butée avec des espaces entre des garnitures adjacentes pour un écoulement d'air de fuite (70), soit une petite ouverture (72a) est formée à travers la vanne (72) pour l'écoulement d'air de fuite (70).

2. Système de ventilation de véhicule ferroviaire selon la revendication 1, dans lequel
les informations de pression externe de véhicule (61) sont une valeur de détection détectée par un capteur de pression externe de véhicule (51) prévu à l'extérieur du véhicule ferroviaire (10),
les informations de pression interne de véhicule (62) sont une valeur de détection détectée par un capteur de pression interne de véhicule (52) prévu à l'intérieur du véhicule ferroviaire, et
lorsqu'il est déterminé qu'une pression externe de véhicule (61) basée sur la valeur de détection du capteur de pression externe de véhicule a varié d'une quantité supérieure à une tolérance prédéterminée, la section de commande (50) commande la section d'ajustement de débit d'écoulement afin de régler le débit d'écoulement de ventilation au second débit d'écoulement de ventilation.

3. Système de ventilation de véhicule ferroviaire selon la revendication 1, dans lequel
les informations de pression externe de véhicule (61) sont une valeur de détection détectée par un capteur de pression externe de véhicule (51) prévu à l'extérieur du véhicule ferroviaire (10),
les informations de pression interne de véhicule (62) sont une valeur de détection détectée par un capteur de pression interne de véhicule (52) prévu à l'intérieur du véhicule ferroviaire, et
la section de commande (50) compare une pression externe de véhicule (61) basée sur la valeur de détection du capteur de pression externe de véhicule et une pression interne de véhicule (62) basée sur la valeur de détection du capteur de pression interne de véhicule, et lorsqu'il est déterminé qu'une différence entre la pression externe de véhicule et la pression interne de véhicule est en dehors d'une plage de tolérance, la section de commande commande la section d'ajustement de débit d'écoulement afin de régler le débit d'écoulement de ventilation au second débit d'écoulement de ventilation.

4. Système de ventilation de véhicule ferroviaire selon la revendication 1, dans lequel
les informations de pression externe de véhicule (61) sont une valeur de détection détectée par un capteur de pression externe de véhicule (51) prévu à l'extérieur du véhicule ferroviaire (10),
les informations de pression interne du véhicule (62) sont une valeur de pression interne de véhicule estimée sur la base de la valeur de détection du capteur de pression externe de véhicule, et
la section de commande (50) compare la valeur de détection du capteur de pression externe de véhicule et la valeur de pression interne de véhicule estimée, et lorsqu'il est déterminé qu'une différence entre la valeur de détection et la valeur de pression interne de véhicule estimée est en dehors d'une plage de tolérance, la section de commande commande la section d'ajustement de débit d'écoulement afin de régler le débit d'écoulement de ventilation au second débit d'écoulement de ventilation.

5. Système de ventilation de véhicule ferroviaire selon la revendication 1, dans lequel
les informations de pression externe de véhicule (61) sont une valeur de pression externe du véhicule estimée sur la base d'une valeur de détection détectée par un capteur de pression interne de véhicule (52) prévu à l'intérieur du véhicule ferroviaire (10),
les informations de pression interne de véhicule (62) sont la valeur de détection détectée par le capteur de pression interne de véhicule, et
la section de commande compare la valeur de pression externe de véhicule estimée et la valeur de détection du capteur de pression interne de véhicule, et lorsqu'il est déterminé qu'une différence entre la valeur de pression externe de véhicule estimée et la valeur de détection est en dehors d'une plage de tolérance, la section de commande commande la section d'ajustement de débit d'écoulement afin de régler le débit d'écoulement de ventilation au second débit d'écoulement de ventilation.

6. Système de ventilation de véhicule ferroviaire selon la revendication 1, dans lequel
les informations de pression externe de véhicule (61) sont une valeur de pression externe de véhicule calculée sur la base d'informations de tunnel et d'informations de vitesse,
les informations de pression interne de véhicule (62) sont une valeur de détection détectée par un capteur de pression interne de véhicule (52) prévu à l'intérieur du véhicule ferroviaire (10), et
lorsqu'il est déterminé que la valeur de pression externe de véhicule (61) calculée a varié d'une quantité supérieure à une tolérance prédéterminée, la section de commande (50) commande la section d'ajustement de débit afin de régler le débit d'écoulement de ventilation au second débit d'écoulement de ventilation.

7. Système de ventilation de véhicule ferroviaire selon la revendication 1, dans lequel
les informations de pression externe de véhicule (61) sont une valeur de pression externe de véhicule calculée sur la base d'informations de tunnel et d'informations de vitesse,
les informations de pression interne de véhicule (62) sont une valeur de pression interne de véhicule estimée sur la base de la valeur de pression externe de véhicule calculée, et
lorsqu'il est déterminé que la valeur de pression externe de véhicule calculée a varié d'une quantité supérieure à une tolérance prédéterminée, la section de commande commande la section d'ajustement de débit d'écoulement afin de régler le débit d'écoulement de ventilation au second débit d'écoulement de ventilation.
